# DEMANDE DE BREVET EUROPEEN

(11) **EP 1 613 039 A1**
(43) Date de publication de la demande: **04.01.2006**
(21) Numéro de dépôt: 05291289.6
(22) Date de dépôt: 16.06.2005
(51) Int. Cl.: H04M 1/725, G10H 1/00

(54) **Téléphone portable permettant l'enregistrement et la reproduction des séquences audio**

(30) Priorité: 28.06.2004 FR 0407069
(71) Demandeur: SAGEM S.A., 75015 Paris (FR)
(72) Inventeur: Dubois, Christophe, 95210 Saint-Gratien (FR)
(74) Mandataire: Maillet, Alain

(57) **Abrégé**

L'invention concerne un dispositif RCD d'émission/réception de signaux radioélectriques muni de moyens de restitution (BUFR, BUFT, DACS, DACT, SPK, RAT) de stimuli sonores.

Le dispositif selon l'invention inclut des moyens de fourniture (MXR, MXT), destinés à être activés hors communication et à fournir des données prédéterminées Mds aux moyens de restitution, lesquelles données prédéterminées Mds représentent au moins une séquence sonore préalablement produite par un utilisateur du dispositif.

Les moyens de fourniture (MXR, MXT) permettent d'utiliser, pour effectuer hors communication une restitution de séquences sonores complexes, les ressources préexistantes constituées par les moyens de restitution qui sont usuellement inactifs à de tels moments dans les dispositifs d'émission/réception connus, et assurent ainsi une utilisation plus rentable de ces ressources préexistantes.

## Description

### DOMAINE TECHNIQUE DE L'INVENTION

La présente invention concerne un dispositif d'émission/réception de signaux radioélectriques muni de moyens de restitution de stimuli sonores, lesquels moyens sont destinés à recevoir des données représentatives desdits stimuli et à être activés lorsque des signaux véhiculant de telles données sont reçus par le dispositif au cours d'une communication.

### ARRIERE-PLAN TECHNOLOGIQUE DE L'INVENTION

De tels dispositifs d'émission/réception sont couramment utilisés dans des systèmes de télécommunication sans fil existants, qu'ils soient de dimension étendue comme les systèmes de type GSM ou UMTS, ou de dimension locale comme les systèmes de type DECT.

Dans un dispositif d'émission/réception connu, les moyens de restitution servent le plus souvent à transformer des données représentatives d'un signal de parole en des sons destinés à être entendus par un utilisateur dudit dispositif, ou en un signal radioélectrique destiné à être transmis vers un interlocuteur d'un tel utilisateur. Ces moyens de restitution ne sont donc activés que lorsqu'une communication est effectivement établie entre l'utilisateur et son interlocuteur.

### DESCRIPTION GENERALE DE L'INVENTION

L'invention est liée aux considérations suivantes, qui résultent d'une analyse menée par les inventeurs de l'arrière-plan technologique décrit ci-dessus.

Les dispositifs d'émission/réception connus ne sont usuellement pas capables de restituer hors communication des séquences sonores complexes telles par exemple des mélodies. Ainsi, une sonnerie précédant l'établissement d'une communication sera généralement émise par un synthétiseur de sons simples, qui ne peut générer que des séquences sonores frustes et sans grande complexité harmonique. Or, il existe chez de nombreux utilisateurs un souhait de pouvoir choisir des séquences sonores de plus grande complexité pour constituer les sonneries destinées à les alerter d'une communication entrante, ces sonneries devant ainsi être plus agréables à entendre et être moins intrusives pour l'entourage de l'utilisateur alerté, voire indicatives d'un certain goût musical de celui-ci.

Certains dispositifs d'émission/réception conformes au paragraphe introductif sont à l'heure actuelle capables d'émettre des séquences sonores complexes, mais ceci est obtenu en munissant de tels dispositifs de moyens de traitement du signal spécifiques aptes à convertir des ensembles de données représentatives de mélodies polyphoniques, par exemple des fichiers de type "wave" (appellation anglo-saxonne connue de l'homme du métier comme représentative d'une catégorie de fichiers de données identifiés par un suffixe s'écrivant ".wav") en des signaux de commande d'un haut-parleur spécifique intégré dans le dispositif d'émission/réception.

Ainsi, dans l'état actuel de la technique, la restitution de séquences sonores complexes par un dispositif d'émission/réception nécessite d'intégrer dans ce dispositif un équipement spécifique qui présente un coût considérable à la fois en termes de matériel et de consommation énergétique, cette dernière étant prohibitive dans un terminal dont l'alimentatiun en énergie se fait au moyen d'une batterie dont la capacité est limitée par nature.

L'un des buts de l'invention est de rendre possible une restitution de séquences sonores complexes par un dispositif d'émission/réception tel un téléphone mobile ou encore un assistant numérique personnel, sans pour autant nécessiter de munir un tel dispositif de moyens de traitement de signal supplémentaires à ceux qui lui sont nécessaires pour restituer des stimuli sonores usuellement échangés en cours de communication.

En effet, un dispositif d'émission/réception conforme au paragraphe introductif est caractérisé selon un aspect matériel de l'invention en ce que, les moyens de restitution incluant au moins une mémoire tampon destinée à recevoir les données à restituer, le dispositif inclut en outre des moyens de fourniture, destinés à être activés hors communication et à fournir des données prédéterminées à une telle mémoire tampon, lesquelles données prédéterminées représentant au moins une séquence sonore préalablement produite par un utilisateur du dispositif.

Les moyens de fourniture inclus dans un dispositif d'émission/réception conforme à l'invention permettent d'utiliser, pour réaliser une restitution de séquences sonores complexes hors communication, les moyens de restitution qui sont usuellement inactifs à de tels moments dans les dispositifs d'émission/réception connus, et permettent d'éviter d'avoir recours à des moyens de traitement de signal supplémentaires. L'invention assure ainsi une utilisation plus efficace dans le temps, et donc plus rentable, de ressources préexistantes constituées en l'espèce par les moyens de restitution.

Selon une première variante de l'invention, les moyens de restitution incluent une mémoire tampon de réception, disposée entre une antenne de réception et un haut-parleur, et apte à recevoir des données représentant des sons destinés à être rendus audibles par le haut-parleur.

La mémoire tampon de réception est destinée à stocker temporairement avant leur traitement des données représentant des sons initialement produits en cours de communication par un interlocuteur de l'utilisateur du dispositif, et captées par ledit dispositif sur son antenne de réception. Dans une telle configuration, l'opération de restitution s'interprète donc en une restitution à l'utilisateur du dispositif des sons produits par son interlocuteur. Cette première variante de l'invention prévoit donc de transférer, hors communication, les données prédéterminées dans cette mémoire tampon de réception, lesdites données étant ensuite tout naturellement traitées par les moyens de restitution comme si elles venaient d'être reçues par l'antenne de réception.

Dans une deuxième variante de l'invention, qui peut être mise en oeuvre alternativement ou cumulativement avec la première variante, les moyens de restitution incluent une mémoire tampon d'émission, disposée entre un microphone et une antenne d'émission, et apte à recevoir des données destinées à être émises sous la forme d'au moins un signal radioélectrique par l'antenne d'émission.

La mémoire tampon d'émission est destinée à stocker temporairement avant leur traitement des données représentant des sons produits en cours de communication par l'utilisateur du dispositif, et devant être émises vers un interlocuteur distant par ledit dispositif sur son antenne d'émission, qui pourra d'ailleurs dans certains cas être constituée par l'antenne de réception. Dans une telle configuration, l'opération de restitution s'interprète donc en une restitution à cet interlocuteur distant des sons produits par l'utilisateur du dispositif. Cette deuxième variante de l'invention prévoit donc de transférer, hors communication, les données prédéterminées dans cette mémoire tampon d'émission, lesdites données étant ensuite tout naturellement traitées par les moyens de restitution comme si elles venaient d'être captés par le microphone.

Selon un mode de mise en oeuvre particulier de l'invention et/ou de ses variantes décrites ci-dessus, les moyens de fourniture incluent une mémoire auxiliaire, reliée aux moyens de restitution et destinée à contenir des données prédéterminées.

Une telle mémoire auxiliaire pourra être intégrée dans le dispositif d'émission/réception conforme à l'invention, ou être séparable de ce dispositif, pouvant par exemple être constituée par une mémoire amovible de type Micro-Sim ou Memory Stick. Ainsi, une mémorisation dans la mémoire auxiliaire des données prédéterminées pourra avoir été réalisée avant que cette mémoire auxiliaire ne se trouve connectée au dispositif d'émission/réception conforme à l'invention, par exemple au moyen d'un ordinateur muni de moyens de lecture/écriture d'une telle mémoire auxiliaire. La mémorisation des données prédéterminées pourra cependant également être réalisée sans utilisation de moyens matériels externes audit dispositif, en mettant par exemple en oeuvre la mémoire tampon de réception couplée au microphone au moyen duquel une séquence sonore produite par l'utilisateur hors communication pourra être captée et mémorisée grâce à la deuxième variante de l'invention.

L'invention concerne également, selon un autre de ses aspects matériels, un système de télécommunication incluant au moins deux émetteurs/récepteurs destinés à communiquer l'un avec l'autre, au moins l'un desquels étant constitué par un dispositif d'émission/réception conforme à la description qui précède.

L'invention concerne également, sous une forme plus générale, un procédé de transmission de données représentatives de stimuli sonores au sein d'un dispositif d'émission/réception de signaux radioélectriques muni de moyens de restitution de stimuli, lesquels moyens de restitution étant destinés à être activés lorsque des signaux véhiculant de telles données sont reçus par le dispositif au cours d'une communication, lesdits moyens de restitution incluant une mémoire tampon à recevoir lesdites données, procédé caractérisé en ce qu'il inclut :
- une étape d'activation hors communication des moyens de restitution, et
- une étape de fourniture de données prédéterminées à une mémoire tampon, lesquelles données prédéterminées représentant une séquence sonore préalablement produite par un utilisateur du dispositif.

Dans un mode de mise en oeuvre particulier de l'invention, un procédé conforme à la description qui précède pourra inclure en outre une étape de mémorisation préalable desdites données prédéterminées dans une mémoire auxiliaire.

A défaut de mise en oeuvre d'une telle étape de mémorisation préalable, les données prédéterminées pourront être mémorisées dans des moyens de mémorisation inclus dans les moyens de restitution, antérieurement rendus prêts à recevoir ces données suite à l'exécution préalable de l'étape d'activation.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig.1 est un schéma fonctionnel qui représente un système de télécommunication dans lequel l'invention est mise en oeuvre, et
La Fig.2 est un schéma fonctionnel qui représente un dispositif d'émission/réception conforme à un mode de réalisation particulièrement avantageux de l'invention.

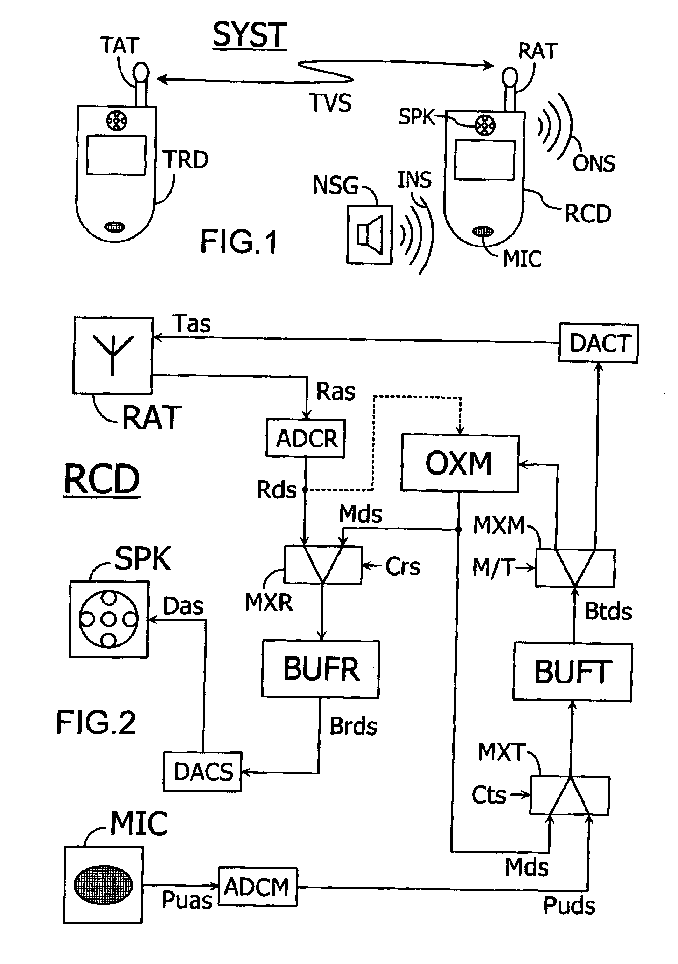

La Fig.1 représente schématiquement un système de télécommunication SYST incluant au moins deux émetteurs/récepteurs TRD et RCD destinés à communiquer l'un avec l'autre, au moins l'un desquels étant constitué par un dispositif d'émission/réception conforme à la présente invention, en l'occurrence l'émetteur/récepteur RCD. Les émetteurs/récepteurs TRD et RCD sont destinés à échanger entre eux via des systèmes d'antennes respectifs TAT et RAT des signaux radioélectriques TVS porteurs de données qui sont le plus souvent représentatives de signaux de parole, lesquels signaux de parole étant usuellement captés au cours d'une communication par un microphone MIC, transmis sous forme de signaux TVS et restitués en temps réel à un interlocuteur distant par un haut-parleur semblable au haut-parleur SPK.

Le dispositif d'émission/réception RCD conforme à l'invention est capable de restituer hors communication, au moyen de son haut-parleur SPK, des séquences sonores complexes telles par exemple des mélodies polyphoniques représentées ici sous forme d'une onde acoustique de sortie ONS. Selon une variante de l'invention, ladite onde acoustique de sortie ONS pourra avoir été préalablement produite sous la forme d'une onde acoustique d'entrée INS par un générateur de sons NSG, par exemple constitué par un haut-parleur externe ou par l'utilisateur même du dispositif d'émission/réception RCD, et enregistrée au moyen du microphone MIC dont est muni ce dispositif d'émission/réception RCD. L'onde acoustique de sortie ONS pourra en outre avoir été préalablement définie, selon une autre variante de l'invention, par un signal radioélectrique TVS émis par un interlocuteur distant au moyen de son propre émetteur/récepteur TRD.

La Fig.2 représente un dispositif d'émission/réception RCD conforme à un mode de réalisation particulièrement avantageux de l'invention, qui inclut un unique système d'antenne de réception et d'émission RAT, un microphone MIC et un haut-parleur SPK. Ce dispositif d'émission/réception RCD est muni de moyens de restitution (BUFR, BUFT, DACS, DACT, SPK, RAT) de stimuli sonores, lesquels moyens sont destinés à recevoir des données (Brds, Btds) représentatives desdits stimuli et à être activés lorsque des signaux véhiculant de telles données sont reçus par le dispositif au cours d'une communication. Dans l'exemple de réalisation de l'invention représenté ici, les moyens de restitution incluent une mémoire tampon de réception BUFR, disposée entre le système d'antenne RAT et le haut-parleur SPK, et apte à recevoir des données représentant des sons destinés à être rendus audibles par le haut-parleur SPK. Les moyens de restitution incluent en outre dans cet exemple une mémoire tampon d'émission BUFT, disposée entre le microphone MIC et le système d'antenne RAT, et apte à recevoir des données destinées à être émises sous la forme d'au moins un signal radioélectrique par ledit système d'antenne RAT.

Le dispositif d'émission/réception RCD inclut en outre des moyens de fourniture (MXR, MXT), par exemple des dispositifs d'aiguillage de type multiplexeur, destinés à être activés hors communication au moyen de signaux d'activation (Crs, Cts) et à fournir des données prédéterminées Mds aux moyens de restitution, lesquelles données prédéterminées Mds représentant au moins une séquence sonore préalablement produite par un utilisateur du dispositif d'émission/réception RCD.

Les données prédéterminées pourront avoir été préalablement mémorisées dans une mémoire auxiliaire OXM, incluse ici au sein même du dispositif d'émission/réception RCD, et reliée à la fois à la mémoire tampon de réception BUFR et à la mémoire tampon d'émission BUFT. Dans d'autres modes de mise en oeuvre de l'invention, les données prédéterminées Mds pourront provenir d'une source externe au dispositif d'émission/réception RCD.

Un premier type d'opération de restitution de données prédéterminées pourra consister en un transfert hors communication, vers la mémoire tampon de réception BUFR, des données prédéterminées Mds mémorisées dans la mémoire auxiliaire OXM. Ces données seront ensuite traitées par les moyens de restitution comme si elles venaient d'être reçues par le système d'antenne RAT, et seront alors envoyées au haut-parleur SPK *via* un convertisseur numérique/analogique de sortie DACS destiné à transformer en un signal analogique de sortie Das les données Brds contenues dans la mémoire tampon de réception BUFR, qui sont encodées en un format numérique tel le format ADPCM (acronyme connu de l'homme du métier de l'expression anglaise "Adaptive Pulse Code Modulation").

Un deuxième type d'opération de restitution de données prédéterminées pourra consister en un transfert hors communication, vers la mémoire tampon d'émission BUFT, des données prédéterminées Mds mémorisées dans la mémoire auxiliaire OXM. Ces données seront ensuite traitées par les moyens de restitution comme si elles venaient d'être captées par le microphone MIC. En particulier, les données Btds contenues dans la mémoire tampon d'émission BUFT pourront être envoyées au système d'antenne RAT *via* un convertisseur numérique/analogique d'émission DACT destiné à transformer les données Brds en un signal analogique à transmettre Tas.

Selon une variante de ce deuxième type d'opération de restitution, la séquence sonore produite par l'utilisateur du dispositif, séquence dont les données prédéterminées sont représentatives, pourra avantageusement avoir été préalablement saisie au moyen du microphone MIC sous la forme d'un signal analogique Puas et fournie à la mémoire tampon d'émission BUFT, après conversion par un convertisseur analogique/numérique d'entrée ADCM en un signal numérique Puds au format ADPCM. Un autre dispositif d'aiguillage MXM inclus dans les moyens de fourniture et piloté par un signal de contrôle M/T permettra ensuite de diriger vers la mémoire auxiliaire OXM les données Btds contenues dans ladite mémoire tampon d'émission BUFT, de manière à ce que ces données puissent être réutilisées ultérieurement en tant que données prédéterminées Mds conformément à la description des premier et deuxième type d'opération de restitution sus-décrits.

Par ailleurs, la séquence sonore dont les données prédéterminées Mds sont représentatives pourra optionnellement avoir été produite par un interlocuteur distant et reçue sous forme d'un signal analogique Ras par le système d'antenne RAT, ledit signal étant alors converti par un convertisseur analogique/numérique de réception ADCR en un signal numérique Rds de type ADPCM porteur des données prédéterminées qui pourront alors être mémorisées dans la mémoire auxiliaire OXM en vue d'une utilisation ultérieure, comme l'indique le chemin de données représenté en pointillés sur la présente figure.

Ainsi qu'il ressort de la description qui précède, les moyens de fourniture (MXR, MXT) permettent d'utiliser, pour effectuer une restitution de séquences sonores complexes hors communication, des ressources préexistantes constituées en l'espèce par les moyens de restitution, qui sont usuellement inactifs à de tels moments dans les dispositifs d'émission/réception connus. L'invention assure ainsi une utilisation plus efficace dans le temps, et donc plus rentable, de ces ressources préexistantes.

## Revendications

1. Dispositif d'émission/réception de signaux radioélectriques muni de moyens de restitution de stimuli sonores, lesquels moyens sont destinés à recevoir des données représentatives desdits stimuli et à être activés lorsque des signaux véhiculant de telles données sont reçus par le dispositif au cours d'une communication, dispositif **caractérisé en ce que**, les moyens de restitution incluant au moins une mémoire tampon destinée à recevoir les données à restituer, le dispositif inclut en outre des moyens de fourniture, destinés à être activés hors communication et à fournir des données prédéterminées à une telle mémoire tampon, lesquelles données prédéterminées représentant au moins une séquence sonore préalablement produite par un utilisateur du dispositif.

2. Dispositif selon la revendication 1, **caractérisé en ce que** les moyens de restitution incluent une mémoire tampon de réception, disposée entre une antenne de réception et un haut-parleur, et apte à recevoir des données représentant des sons destinés à être rendus audibles par le haut-parleur.

3. Dispositif selon l'une des revendications 1 ou 2, **caractérisé en ce que** les moyens de restitution incluent une mémoire tampon d'émission, disposée entre un microphone et une antenne d'émission, et apte à recevoir des données destinées à être émises sous la forme d'au moins un signal radioélectrique par l'antenne d'émission.

4. Dispositif selon l'une des revendications 1 à 3, **caractérisé en ce que** les moyens de fourniture incluent une mémoire auxiliaire, reliée aux moyens de restitution et destinée à contenir des données prédéterminées.

5. Système de télécommunication incluant au moins deux émetteurs/récepteurs destinés à communiquer l'un avec l'autre, au moins l'un desquels étant constitué par un dispositif d'émission/réception conforme à l'une des revendications précédentes.

6. Procédé de transmission de données représentatives de stimuli sonores au sein d'un dispositif d'émission/réception de signaux radioélectriques muni de moyens de restitution de stimuli, lesquels moyens de restitution étant destinés à être activés lorsque des signaux véhiculant de telles données sont reçus par le dispositif au cours d'une communication, lesdits moyens de restitution incluant une mémoire tampon à recevoir lesdites données, procédé **caractérisé en ce qu'**il inclut :
. une étape d'activation hors communication des moyens de restitution, et
. une étape de fourniture de données prédéterminées à une mémoire tampon, lesquelles données prédéterminées représentant une séquence sonore préalablement produite par un utilisateur du dispositif.

7. Procédé de transmission selon la revendication 6, **caractérisé en ce qu'**il inclut en outre une étape de mémorisation préalable desdites données prédéterminées dans une mémoire auxiliaire.
